# EUROPEAN PATENT APPLICATION

(11) **EP 4 357 305 A1**
(43) Date of publication of application: **24.04.2024**
(21) Application number: 23196774.6
(22) Date of filing: 12.09.2023
(51) Int. Cl.: C01G 53/00, H01M 4/00

(54) **POSITIVE ELECTRODE ACTIVE MATERIAL, POSITIVE ELECTRODE, AND NONAQUEOUS ELECTOLYTE SECONDARY BATTERY**

(30) Priority: 20.10.2022 JP 2022168576
(71) Applicant: Prime Planet Energy & Solutions, Inc., Chuo-ku Tokyo 103-0022 (JP)
(72) Inventor: SAITO, Masaya, Tokyo, 103-0022 (JP); TABUSHI, Akihiro, Tokyo, 103-0022 (JP); HIGUCHI, Takatoshi, Tokyo, 103-0022 (JP)
(74) Representative: Kuhnen & Wacker Patent- und Rechtsanwaltsbüro PartG mbB

(57) **Abstract**

Provided is a positive electrode active material capable of imparting high gas generation suppressing performance during storage to a nonaqueous electrolyte secondary battery even in the case of increasing a density of a positive electrode active material layer. The positive electrode active material disclosed here includes: first lithium composite oxide particles in the form of single particles; and second lithium composite oxide particles in the form of secondary particles. When in a volume-based particle size distribution obtained by a laser diffraction scattering method, a 10%-particle size (D10) is a particle size with a cumulative frequency of 10%, a 50%-particle size (D50) is a particle size with a cumulative frequency of 50%, and a 90%-particle size (D90) is a particle size with a cumulative frequency of 90%, a 50%-particle size of the second lithium composite oxide particles is larger than that of the first lithium composite oxide particles, and a particle size distribution width of the second lithium composite oxide particles expressed by (D90-D10)/D50 is 0.50 to 0.65.

## Description

### TECHNICAL FIELD

The present disclosure relates to a positive electrode active material. The present disclosure also relates to a positive electrode using the positive electrode active material. The present disclosure also relates to a nonaqueous electrolyte secondary battery using the positive electrode.

### BACKGROUND ART

Recent nonaqueous electrolyte secondary batteries such as lithium ion secondary batteries are suitably used for, for example, portable power supplies for devices such as personal computers and portable terminals, and vehicle driving power supplies for vehicles such as battery electric vehicles (BEVs), hybrid electric vehicles (HEVs), and plug-in hybrid electric vehicles (PHEVs).

With widespread use of nonaqueous electrolyte secondary batteries, these batteries are required to have further enhanced performance. A positive electrode of a nonaqueous electrolyte secondary battery generally employs a lithium composite oxide as a positive electrode active material. In order to enhance performance of a nonaqueous electrolyte secondary battery, a technique is known in which two types of lithium composite oxides having different particle properties (see, for example, Patent Document 1) are mixed. In Patent Document 1, a lithium composite oxide in the form of single particles and a lithium composite oxide in the form of agglomerated (i.e., secondary) particles are used.

On the other hand, the followings are known. When a positive electrode active material with a broad particle size distribution is used, a voltage applied to the positive electrode active material particles in an electrode becomes uneven. As a result, when a nonaqueous electrolyte secondary battery is repeatedly charged and discharged, fine particles are selectively deteriorated, and thus the capacity of the nonaqueous electrolyte secondary battery decreases (see, for example, Patent Document 2). Accordingly, from the viewpoint of cycle characteristics, a positive electrode active material with a uniform (i.e., narrow) particle size distribution is generally used.

### CITATION LIST

### PATENT DOCUMENTS

Patent Document 1: WO2021/065162
Patent Document 2: WO2013/183711

### SUMMARY OF INVENTION

An example of performance of a nonaqueous electrolyte secondary battery required to be enhanced is a volume energy density. One method for increasing the volume energy density is to increase the density of a positive electrode active material layer including a positive electrode active material. Inventors of the present disclosure intensively studied this method to find that in the case of using a lithium composite oxide in the form of single particles and a lithium composite oxide in the form of secondary particles in combination as positive electrode active materials and performing press treatment on the positive electrode active material layer under a pressure higher than that in a conventional method in order to further increase the density, a large number of cracks occur in secondary particles so that the amount of gas generated during storage of the nonaqueous electrolyte secondary battery increases.

It is therefore an object of the present disclosure to provide a positive electrode active material capable of imparting high gas generation suppressing performance during storage to a nonaqueous electrolyte secondary battery even in the case of increasing a density of a positive electrode active material layer.

The positive electrode active material disclosed here includes: first lithium composite oxide particles in the form of single particles; and second lithium composite oxide particles in the form of secondary particles. When in a volume-based particle size distribution obtained by a laser diffraction scattering method, a 10%-particle size (D10) is a particle size with a cumulative frequency of 10%, a 50%-particle size (D50) is a particle size with a cumulative frequency of 50%, and a 90%-particle size (D90) is a particle size with a cumulative frequency of 90%, a 50%-particle size (D50) of the second lithium composite oxide particles is larger than a 50%-particle size (D50) of the first lithium composite oxide particles, and a particle size distribution width of the second lithium composite oxide particles expressed by (D90-D10)/D50 is 0.50 to 0.65.

With this configuration, even in the case of increasing the density of the positive electrode active material layer, it is possible to provide a positive electrode active material capable of imparting high gas generation suppressing performance during storage to a nonaqueous electrolyte secondary battery.

In another aspect, a positive electrode disclosed here includes: a positive electrode current collector; and a positive electrode active material layer supported by the positive electrode current collector. The positive electrode active material layer includes the positive electrode active material described above. With this configuration, even in the case of increasing the density of the positive electrode active material layer, it is possible to provide a positive electrode capable of imparting high gas generation suppressing performance during storage to a nonaqueous electrolyte secondary battery.

In yet another aspect, a nonaqueous electrolyte secondary battery disclosed here includes: a positive electrode; a negative electrode; and a nonaqueous electrolyte. The positive electrode is the positive electrode described above. With this configuration, even in the case of increasing the density of the positive electrode active material layer, it is possible to provide a nonaqueous electrolyte secondary battery with high gas generation suppressing performance during storage.

### BRIEF DESCRIPTION OF THE DRAWINGS

FIG. 1 is a schematic view of single particles.
FIG. 2 is a schematic view of secondary particles.
FIG. 3 is a cross-sectional view schematically illustrating a positive electrode according to one embodiment of the present disclosure.
FIG. 4 is a cross-sectional view schematically illustrating an internal structure of a lithium ion secondary battery according to one embodiment of the present disclosure.
FIG. 5 is a schematic disassembled view illustrating a structure of a wound electrode body of a lithium ion secondary battery according to one embodiment of the present disclosure.

### DESCRIPTION OF PREFERRED EMBODIMENTS

An embodiment of the present disclosure will be described hereinafter with reference to the drawings. Matters not specifically mentioned herein but required for carrying out the present disclosure can be understood as matters of design of a person skilled in the art based on related art in the field. The present disclosure can be carried out on the basis of the contents disclosed in the description and common general knowledge in the field. In the drawings, members and parts having the same functions are denoted by the same reference characters for description. Dimensional relationships (e.g., length, width, and thickness) in the drawings do not reflect actual dimensional relationships. A numerical range expressed as "A to B" herein includes A and B.

A "secondary battery" herein refers to a power storage device capable of being repeatedly charged and discharged, and includes a so-called storage battery and a power storage element such as an electric double layer capacitor. A "lithium ion secondary battery" herein refers to a secondary battery that uses lithium ions as charge carriers and performs charge and discharge by movement of charges accompanying lithium ions between positive and negative electrodes.

A positive electrode active material according to this embodiment includes first lithium composite oxide particles in the form of single particles and second lithium composite oxide particles in the form of secondary particles.

The crystal structure of a lithium composite oxide constituting each of the first lithium composite oxide particles and the second lithium composite oxide particles is not particularly limited, and may be, for example, a layered structure or a spinel structure.

The lithium composite oxide is desirably a lithium transition metal composite oxide including at least one of Ni, Co, or Mn as a transition metal element, and specific examples of the lithium composite oxide include a lithium nickel composite oxide, a lithium cobalt composite oxide, a lithium manganese composite oxide, a lithium nickel manganese composite oxide, a lithium nickel cobalt manganese composite oxide, a lithium nickel cobalt aluminum composite oxide, and a lithium iron nickel manganese composite oxide.

It should be noted that the "lithium nickel cobalt manganese composite oxide" herein includes not only oxides including Li, Ni, Co, Mn, and O as constituent elements, but also an oxide further including one or more additive elements besides them. Examples of the additive elements include transition metal elements and typical metal elements such as Mg, Ca, Al, Ti, V, Cr, Y, Zr, Nb, Mo, Hf, Ta, W, Na, Fe, Zn, and Sn. The additive element may be a metalloid element such as B, C, Si, or P, and a nonmetal element such as S, F, Cl, Br, or I. This also applies, in the same manner, to, for example, the lithium nickel composite oxide, the lithium cobalt composite oxide, the lithium manganese composite oxide, the lithium nickel manganese composite oxide, the lithium nickel cobalt aluminium composite oxide, and the lithium iron nickel manganese composite oxide described above.

The lithium composite oxide is more desirably a lithium composite oxide containing nickel (Ni) and having a layered crystal structure (i.e., Ni-containing lithium composite oxide having a layered structure). The fact that a lithium composite oxide has a layered crystal structure can be confirmed by a known method (e.g., an X-ray diffraction method).

Among Ni-containing lithium composite oxides having a layered crystal structure, a lithium nickel cobalt manganese composite oxide is desirable because of excellent properties such as low initial resistance. From the viewpoint of a high volume energy density of the nonaqueous electrolyte secondary battery, a content of nickel with respect to all metal elements except for lithium in the lithium nickel cobalt manganese composite oxide is desirably 50 mol% or more, and more desirably 55 mol% or more. On the other hand, from the viewpoint of high stability, the content of nickel with respect to all metal elements except for lithium is desirably 88 mol% or less, and more desirably 85 mol% or less.

Specifically, the lithium nickel cobalt manganese composite oxide desirably has the composition expressed by Formula (I):

Li₁₊ₓNi_{y}CO_{z}Mn_{(1-y-z)}M_{α}O_{2-β}Q_{β} (I)

In Formula (I), x, y, z, α, and β respectively satisfy -0.3 ≤ x ≤ 0.3, 0.1 < y < 0.9, 0 < z < 0.5, 0 ≤ α ≤ 0.1, and 0 ≤ β ≤ 0.5. M is at least one element selected from the group consisting of Zr, Mo, W, Mg, Ca, Na, Fe, Cr, Zn, Sn, B, and Al. Q is at least one element selected from the group consisting of F, Cl, and Br.

From the viewpoint of a high energy density of the nonaqueous electrolyte secondary battery, y and z desirably satisfy 0.50 ≤ y ≤ 0.88 and 0.10 ≤ z ≤ 0.45, and more desirably satisfy 0.55 ≤ y ≤ 0.85 and 0.10 ≤ z ≤ 0.40.

The first lithium composite oxide particles and the second lithium composite oxide particles may have the same composition or may have different compositions. Because of excellent properties such as low initial resistance, each of the first lithium composite oxide particles and the second lithium composite oxide particles is desirably lithium nickel cobalt manganese composite oxide particles.

The first lithium composite oxide particles are in the form of single particles. The term "single particles" herein refer to particles generated with growth of single crystal nuclei, and thus, refer to particles of single crystal including no grain boundary. The fact where particles are single crystal can be confirmed by analysis of an electron diffraction image obtained with a transmission electron microscope (TEM), for example.

Single particles have the property of being difficult in agglomeration and constitute lithium composite oxide particles by themselves, but can be agglomerated to form lithium composite oxide particles in some cases. It should be noted that in the case where single particles are agglomerated to form lithium composite oxide particles, the number of agglomerated single particles is two or more and ten or less. Thus, one lithium composite oxide particle is constituted by one or more and ten or less single particles, can be constituted by one or more and five or less single particles, can be constituted by one or more and three or less single particles, or can be constituted by one single particle. It should be noted that the number of single particles in one lithium composite oxide particle can be confirmed by observation with a scanning electron microscope (SEM) at a magnification of 10,000 to 30,000.

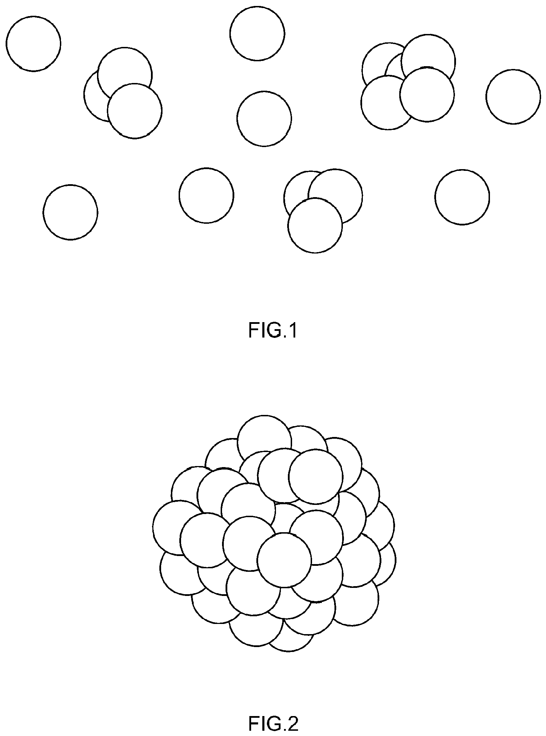

Thus, single particles can be schematically shown, as illustrated in FIG. 1. FIG. 1 shows isolated particles and agglomerated particles in which several particles are agglomerated. On the other hand, secondary particles can be schematically shown, as illustrated in FIG. 2. In FIG. 2, a large number of primary particles are agglomerated to form one particle. Secondary particles are typically constituted at least by 11 or more primary particles. FIGS. 1 and 2 are example, and the first lithium composite oxide particles and the second lithium composite oxide particles used in this embodiment are not limited to the illustrated particles.

In the manner described above, single particles are different from polycrystalline particles constituted by a plurality of crystal grains and secondary particles formed by a large number of agglomerated fine particles (primary particles). A positive electrode active material in the form of single particles can be produced with a known method for obtaining single crystalline particles.

On the other hand, the second lithium composite oxide particles are secondary particles in which primary particles are agglomerated. Typically, the entire secondary particles (i.e., second lithium composite oxide particles) are filled with primary particles, and can have inner voids derived from gaps between primary particles.

In a volume-based particle size distribution of lithium composite oxide particles obtained by a laser diffraction scattering method, a particle size with a cumulative frequency of 10% is defined as a 10%-particle size (D10), a particle size with a cumulative frequency of 50% is defined as a 50%-particle size (D50), and a particle size with a cumulative frequency of 90% is defined as a 90%-particle size (D90). According to a conventional method, D10, D50, and D90 are cumulative frequencies from a small particle size side in the particle size distribution. The 50%-particle size (D50) is also referred to as a median particle size.

In this embodiment, a 50%-particle size (D50) of the second lithium composite oxide particles is larger than a 50%-particle size (D50) of the first lithium composite oxide particles. Thus, in this embodiment, single particles having small particle sizes and secondary particles having large particle sizes are used in combination as a positive electrode active material.

In this embodiment, in the second lithium composite oxide particles, a particle size distribution width expressed by (D90-D10)/D50 is 0.50 to 0.65. In general, from the viewpoint of high cycle characteristics, secondary particles with narrow particle size distribution are used, specifically, secondary particles with a particle size distribution width of about 0.30 to about 0.40 are especially generally used. Thus, in this embodiment, on the contrary, secondary particles with wide particle size distribution are intentionally used.

In this manner, by using single particles with small particle sizes and secondary particles with large particle sizes in combination and allowing the secondary particles to have a particle size distribution width wider than general particles, even in the case of increasing a density of a positive electrode active material layer, high gas generation suppressing performance during storage can be imparted to a nonaqueous electrolyte secondary battery. That is, in this embodiment, both an increased density of the positive electrode active material layer and high storage characteristic of the nonaqueous electrolyte secondary battery can be achieved. In other words, both a high volume energy density and high storage characteristics of the nonaqueous electrolyte secondary battery can be obtained.

Specifically, a cause of gas generation during storage of a nonaqueous electrolyte secondary battery is a crack of secondary particles. Since the particle size distribution width of the second lithium composite oxide particles is 0.5 or more, press stress for increasing the density of the positive electrode active material layer can be reduced so that cracks of the secondary particles can be suppressed. On the other hand, since the particle size distribution width of the second lithium composite oxide particles is 0.65 or less, it is possible to suppress an increase in gas generation during storage caused by an excessive increase of BET specific surface area of the positive electrode active material layer. From the viewpoint of higher suppressing performance of gas generation during storage, the particle size distribution width of the second lithium composite oxide particles is desirably 0.52 to 0.62, and more desirably 0.54 to 0.60.

It should be noted that the particle size distribution width of the second lithium composite oxide particles can be controlled by a known method (e.g., method of changing conditions of crushing and classification after production of lithium composite oxide particles by firing). A volume-based particle size distribution of the second lithium composite oxide particles in which the ordinate is vol% and the abscissa is a particle size generally has one peak top.

A wide particle size distribution causes degradation of cycle characteristics of a nonaqueous electrolyte secondary battery, and in this embodiment, single particles are used for the first lithium composite oxide particles. Single particles contribute to enhancement of cycle characteristics. Thus, even with a wide particle size distribution of the second lithium composite oxide particles, the use of the first lithium composite oxide particles in the form of single particles can enhance cycle characteristics of the nonaqueous electrolyte secondary battery. Thus, the positive electrode active material according to this embodiment imparts high cycle characteristics to the nonaqueous electrolyte secondary battery.

The positive electrode active material according to this embodiment has high powder flowability and high production efficiency of a positive electrode.

The 50%-particle size (D50) of the first lithium composite oxide particles is not particularly limited as long as the 50%-particle size (D50) of the first lithium composite oxide particles is smaller than the 50%-particle size (D50) of the second lithium composite oxide particles. The D50 of the first lithium composite oxide particles is desirably 2 µm to 6 µm, more desirably 3 µm to 5 µm, and even more desirably 3.3 µm to 4.2 µm.

The 50%-particle size (D50) of the second lithium composite oxide particles is not particularly limited as long as the 50%-particle size (D50) of the second lithium composite oxide particles is larger than the 50%-particle size (D50) of the first lithium composite oxide particles. The D50 of the second lithium composite oxide particles is desirably 12 µm to 20 µm, more desirably 13 µm to 20 µm, and even more desirably 14.5 µm to 18 µm.

In a case where the 50%-particle size (D50) of the first lithium composite oxide particles and the 50%-particle size (D50) of the second lithium composite oxide particles are within the desired ranges described above, filling properties of the first lithium composite oxide particles and the second lithium composite oxide particles in the positive electrode active material layer are enhanced, and the volume energy density of the nonaqueous electrolyte secondary battery can be especially increased.

It should be noted that the 50%-particle size (D50) of the first lithium composite oxide particles and the 10%-particle size (D10), the 50%-particle size (D50), and the 90%-particle size (D90) of the second lithium composite oxide particles can be measured with a known laser diffraction scattering type particle size distribution analyzer.

In this embodiment, an average primary particle size of the first lithium composite oxide particles is not particularly limited. From the viewpoint of high output characteristics of the nonaqueous electrolyte secondary battery, the average primary particle size of the first lithium composite oxide particles is desirably less than 2.0 µm, and more desirably 1.95 µm or less. Since gas generation suppressing performance during storage of the nonaqueous electrolyte secondary battery can be further enhanced, the average primary particle size of the first lithium composite oxide particles is desirably 1.5 µm or more, more desirably 1.6 µm or more, and even more desirably 1.7 µm or more.

In this embodiment, from the viewpoints of high output characteristics of the nonaqueous electrolyte secondary battery and higher gas generation suppressing performance during storage, a ratio of the average primary particle size of the first lithium composite oxide particles to the 50%-particle size (D50) of the first lithium composite oxide particles is desirably 0.45 to 0.60, and more desirably 0.50 to 0.60.

An average primary particle size of the second lithium composite oxide particles is not particularly limited, and is, for example, 0.05 µm to 2.5 µm. Since gas generation suppressing performance during storage of the nonaqueous electrolyte secondary battery can be further enhanced, the average primary particle size is desirably 1.2 µm or more, more desirably 1.5 µm or more, and even more desirably 1.7 µm or more. On the other hand, from the viewpoint of especially high cycle characteristics of the nonaqueous electrolyte secondary battery, the average primary particle size is desirably 2.2 µm or less, more desirably 2.0 µm or less, even more desirably 1.9 µm or less, and especially desirably 1.8 µm or less.

It should be noted that an "average primary particle size of lithium composite oxide particles" refers to an average longer diameter of 50 or more randomly selected primary particles which are perceived in an SEM image of the lithium composite oxide particles. Thus, specifically, the average primary particle size can be determined by acquiring an SEM image of the lithium composite oxide particles with an SEM and obtaining longer diameters of 50 or more randomly selected primary particles with image analysis type particle size distribution measurement software (e.g., "Mac-View") to calculate an average of the longer diameters. It should be noted that since the second lithium composite oxide particles are secondary particles, in the case where a cross-sectional observation sample of lithium composite oxide particles are prepared by a cross-section polisher process and a cross-sectional SEM image is used, an average primary particle size of the second lithium composite oxide particles can be easily measured.

It should be noted that an average primary particle size of lithium composite oxide particles can be controlled in the following manner. First, according to a known method, a hydroxide as a precursor of lithium composite oxide particles is prepared. The hydroxide generally includes metal elements except for lithium among metal elements included in the lithium composite oxide particles. The hydroxide and a compound (e.g., lithium carbonate) to be a lithium source are mixed and fired. By adjusting the temperature and time of this firing, the average primary particle size of the lithium composite oxide particles can be controlled. The firing temperature is desirably 700°C to 1000°C. The firing time is desirably 3 hours to 7 hours.

A BET specific surface area of the first lithium composite oxide particles is not particularly limited. Since excellent output characteristics can be imparted to the nonaqueous electrolyte secondary battery, the BET specific surface area of the first lithium composite oxide particles is desirably 0.50 m²/g to 0.85 m²/g, and more desirably 0.55 m²/g to 0.80 m²/g.

A BET specific surface area of the second lithium composite oxide particles is not particularly limited. Since especially excellent output characteristics can be imparted to the nonaqueous electrolyte secondary battery, the BET specific surface area of the second lithium composite oxide particles is desirably 0.10 m²/g to 0.30 m²/g, and more desirably 0.13 m²/g to 0.27 m²/g.

It should be noted that the BET specific surface areas of the first and second lithium composite oxide particles can be measured by a nitrogen adsorption method with a commercially available surface area analyzer.

From the viewpoint of a high volume energy density, the content of nickel with respect to all metal elements except for lithium in the lithium nickel cobalt manganese composite oxide is desirably 55 mol% or more in the first lithium composite oxide particles and 50 mol% or more in the second lithium composite oxide particles, and is more desirably 60 mol% or more in the first lithium composite oxide particles and 55 mol% or more in the second lithium composite oxide particles.

A mixing ratio of the first lithium composite oxide particles and the second lithium composite oxide particles is not particularly limited. When the mixing amount of the first lithium composite oxide particles is excessively small, cycle characteristics tend to degrade. Thus, from the viewpoint of high cycle characteristics, a mass ratio of the first lithium composite oxide particles to the second lithium composite oxide particles (first lithium composite oxide particles/second lithium composite oxide particles) is desirably 20/80 or more, more desirably 30/70 or more, even more desirably 40/60 or more, and especially desirably 45/55 or more. On the other hand, when the mixing amount of the second lithium composite oxide particles is excessively small, volumetric charging-capacity density tends to decrease. Thus, from the viewpoint of a high volumetric charging-capacity density, the mass ratio (first lithium composite oxide particles/second lithium composite oxide particles) is desirably 80/20 or less, more desirably 70/30 or less, even more desirably 60/40 or less, and especially desirably 55/45 or less.

The positive electrode active material may consist only of the first lithium composite oxide particles and the second lithium composite oxide particles. The positive electrode active material may further include particles functioning as a positive electrode active material in addition to the first lithium composite oxide particles and the second lithium composite oxide particles.

In the case of fabricating a nonaqueous electrolyte secondary battery using the positive electrode active material according to this embodiment for the positive electrode, even with an increased density of a positive electrode active material layer, high gas generation suppressing performance during storage can be imparted to the nonaqueous electrolyte secondary battery. The positive electrode active material according to this embodiment imparts high cycle characteristics to the nonaqueous electrolyte secondary battery. In addition, the positive electrode active material according to this embodiment can provide high production efficiency of the positive electrode. The positive electrode active material according to this embodiment is typically a positive electrode active material for a nonaqueous electrolyte secondary battery, desirably a positive electrode active material for a nonaqueous lithium ion secondary battery. The positive electrode active material according to this embodiment can also be used as a positive electrode active material for an all-solid-state secondary battery.

In another aspect, a positive electrode according to this embodiment includes a positive electrode current collector, and a positive electrode active material layer supported by the positive electrode current collector. The positive electrode active material layer includes the positive electrode active material according to the embodiment described above.

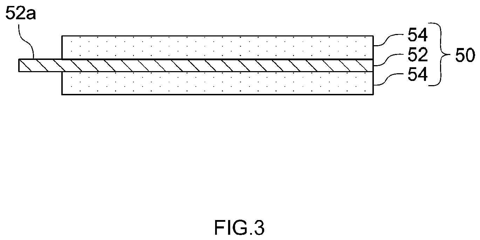

Hereinafter, a positive electrode according to this embodiment will be described using a positive electrode for use in a lithium ion secondary battery as an example, but the positive electrode according to this embodiment is not limited to the example described below. FIG. 3 is a schematic cross-sectional view of the positive electrode according to this embodiment taken along a thickness direction and a width direction.

As illustrated in FIG. 3, a positive electrode 50 includes a positive electrode current collector 52, and a positive electrode active material layer 54 supported on the positive electrode current collector 52. In the illustrated example, the positive electrode active material layer 54 is provided on both surfaces of the positive electrode current collector 52. Alternatively, the positive electrode active material layer 54 may be provided on one surface of the positive electrode current collector 52. Desirably, the positive electrode active material layer 54 is provided on both surfaces of the positive electrode current collector 52.

The positive electrode current collector 52 may be a known positive electrode current collector for use in a lithium ion secondary battery, and examples of the positive electrode current collector 52 include sheets or foil of highly conductive metals (e.g., aluminum, nickel, titanium, and stainless steel). The positive electrode current collector 52 is desirably aluminum foil.

Dimensions of the positive electrode current collector 52 are not particularly limited, and may be appropriately determined depending on battery design. In the case of using aluminum foil as the positive electrode current collector 52, the thickness thereof is not particularly limited, and is, for example, 5 µm or more and 35 µm or less, desirably 7 µm or more and 20 µm or less.

The positive electrode active material layer 54 includes a positive electrode active material. In this embodiment, the positive electrode active material according to the embodiment described above is used as the positive electrode active material. The positive electrode active material layer 54 may include other positive electrode active materials in addition to the positive electrode active material according to the embodiment described above, to the extent that does not inhibit advantages of the present disclosure.

The positive electrode active material layer 54 may include components other than the positive electrode active material, such as trilithium phosphate, a conductive material, and a binder. Desired examples of the conductive material include carbon black such as acetylene black (AB) and other carbon materials (e.g., carbon nanotube). Examples of the binder include polyvinylidene fluoride (PVDF).

A content of the positive electrode active material in the positive electrode active material layer 54 (i.e., content of the positive electrode active material with respect to the total mass of the positive electrode active material layer 54) is not particularly limited, and is desirably 70 mass% or more, more desirably 80 mass% or more and 99 mass% or less, and even more desirably 85 mass% or more and 98 mass% or less. A content of the conductive material in the positive electrode active material layer 54 is not particularly limited, and is desirably 0.5 mass% or more and 15 mass% or less, and more desirably 1 mass% or more and 10 mass% or less. A content of the binder in the positive electrode active material layer 54 is not particularly limited, and is desirably 0.5 mass% or more and 15 mass% or less, and more desirably 0.8 mass% or more and 10 mass% or less.

A thickness of the positive electrode active material layer 54 is not particularly limited, and is, for example, 10 µm or more and 300 µm or less, desirably 20 µm or more and 200 µm or less.

A density of the positive electrode active material layer 54 is not particularly limited, and from the viewpoint of a high volume energy density, the density of the positive electrode active material layer 54 is desirably 3.00 g/cm³ to 4.00 g/cm³, more desirably 3.20 g/cm³ to 4.00 g/cm³, even more desirably 3.40 g/cm³ to 4.00 g/cm³, and especially desirably 3.50 g/cm³ to 4.00 g/cm³. It should be noted that as the density of the positive electrode active material layer 54 increases, the pressure of press treatment for increasing the density of the positive electrode active material layer 54 increases. Thus, cracks tend to occur in lithium composite oxide particles so that gas generation is likely to occur during storage of the lithium ion secondary battery 100. Thus, as the density of the positive electrode active material layer 54 increases, significance of suppression of gas generation during storage of the lithium ion secondary battery 100 increases.

In the case of increasing the density of the positive electrode active material layer 54, since the lithium composite oxide particles are less likely to be cracked, the BET specific surface area is relatively small. For example, in a case where the density of the positive electrode active material layer 54 is 3.50 g/cm³ to 4.00 g/cm³, the positive electrode active material layer 54 can have a BET specific surface area of 0.44 to 0.50 m²/g. The BET specific surface area of the positive electrode active material layer 54 can be measured by a nitrogen adsorption method with a commercially available specific surface area analyzer.

As shown in the illustrated example, a positive electrode active material layer non-formed portion 52a including no positive electrode active material layer 54 may be provided at one end of the positive electrode 50 in the width direction. In the positive electrode active material layer non-formed portion 52a, the positive electrode current collector 52 is exposed so that the positive electrode active material layer non-formed portion 52 can function as a current collector. However, the structure for collecting electricity from the positive electrode 50 is not limited to this example.

In the positive electrode active material layer non-formed portion 52a of the positive electrode sheet 50, an insulating protective layer (not shown) including insulating particles may be provided at a location adjacent to the positive electrode active material layer 54. This protective layer can prevent short circuit between the positive electrode active material layer non-formed portion 52a and the negative electrode active material layer 64.

The positive electrode 50 according to this embodiment can be produced according to a known method. For example, the positive electrode 50 can be produced by preparing a positive electrode active material layer paste including a positive electrode active material, a solvent (dispersion medium), and when necessary, a binder, a conductive material, and so forth, applying the paste onto the positive electrode current collector 52, drying the paste, and performing press treatment on the dried paste.

The positive electrode 50 according to this embodiment can impart high gas generation suppressing performance during storage to the nonaqueous electrolyte secondary battery even in the case of increasing the density of the positive electrode active material layer 54. The positive electrode 50 according to this embodiment can impart high cycle characteristics to the nonaqueous electrolyte secondary battery. The positive electrode 50 according to this embodiment can have high production efficiency. The positive electrode 50 according to this embodiment is typically a positive electrode for a nonaqueous electrolyte secondary battery, and is desirably a positive electrode for a nonaqueous lithium ion secondary battery. The positive electrode 50 according to this embodiment can also be used as a positive electrode for an all-solid-state secondary battery.

In another aspect, a nonaqueous electrolyte secondary battery according to this embodiment includes a positive electrode, a negative electrode, and a nonaqueous electrolyte, and the positive electrode is the positive electrode according to the embodiment described above.

The nonaqueous electrolyte secondary battery according to this embodiment will now be described using an example of a flat square lithium ion secondary battery including a flat wound electrode body and a flat battery case. The nonaqueous electrolyte secondary battery according to this embodiment, however, is not limited to the following examples.

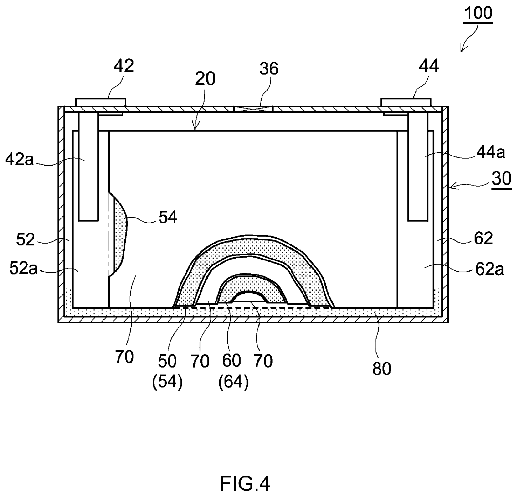

A lithium ion secondary battery 100 illustrated in FIG. 4 is a sealed battery in which a flat wound electrode body 20 and a nonaqueous electrolyte (not shown) are housed in a flat square battery case (i.e., outer container) 30. The battery case 30 includes a positive electrode terminal 42 and a negative electrode terminal 44 for external connection, and a thin safety valve 36 configured such that when the internal pressure of the battery case 30 increases to a predetermined level or more, the safety valve 36 releases the internal pressure. The positive and negative electrode terminals 42 and 44 are electrically connected to positive and negative electrode current collector plates 42a and 44a, respectively. A material for the battery case 30 is, for example, a metal material that is lightweight and has high thermal conductivity, such as aluminum. A current interrupt device (CID) may be disposed between the positive electrode terminal 42 and the positive electrode current collector plate 42a or between the negative electrode terminal 44 and the negative electrode current collector plate 44a.

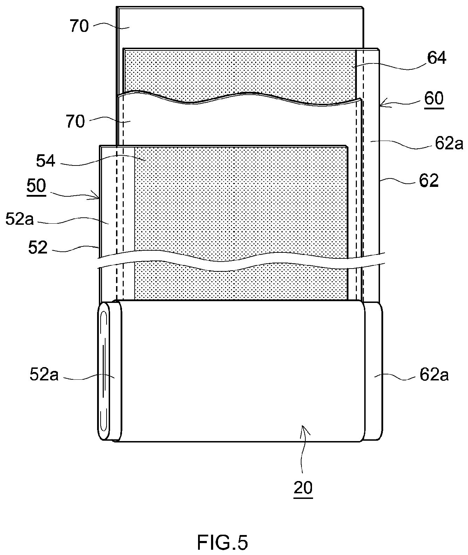

As illustrated in FIGS. 4 and 5, in the wound electrode body 20, the positive electrode sheet 50 and a negative electrode sheet 60 are stacked with two long separator sheets 70 interposed therebetween and wound in the longitudinal direction. In the positive electrode sheet 50, a positive electrode active material layer 54 is formed on one or each (each in this example) surface of the long positive electrode current collector 52 along the longitudinal direction. In the negative electrode sheet 60, the negative electrode active material layer 64 is formed on one or each (each in this example) surface of a long negative electrode current collector 62 along the longitudinal direction.

The positive electrode active material layer non-formed portion 52a (i.e., a portion where no positive electrode active material layer 54 is formed and the positive electrode current collector 52 is exposed) and a negative electrode active material layer non-formed portion 62a (i.e., a portion where no negative electrode active material layer 64 is formed and the negative electrode current collector 62 is exposed) extend off outward from both ends of the wound electrode body 20 in the winding axis direction (i.e., sheet width direction orthogonal to the longitudinal direction). The positive electrode active material layer non-formed portion 52a and the negative electrode active material layer non-formed portion 62a function as current collection portions. The positive electrode current collector plate 42a and the negative electrode current collector plate 44a are respectively joined to the positive electrode active material layer non-formed portion 52a and the negative electrode active material layer non-formed portion 62a. It should be noted that the shapes of the positive electrode active material layer non-formed portion 52a and the negative electrode active material layer non-formed portion 62a are not limited to the illustrated examples. The positive electrode active material layer non-formed portion 52a and the negative electrode active material layer non-formed portion 62a may be formed as current collection tabs processed into predetermined shapes.

As the positive electrode sheet 50, the positive electrode 50 according to the embodiment described above is used. In this example, in the positive electrode sheet 50, the positive electrode active material layer 54 is formed on each surface of the positive electrode current collector 52.

As the negative electrode current collector 62, a known negative electrode current collector for use in a lithium ion secondary battery may be used, and examples of the negative electrode current collector include sheets or foil of highly conductive metals (e.g., copper, nickel, titanium, and stainless steel). The negative electrode current collector 62 is desirably copper foil.

Dimensions of the negative electrode current collector 62 are not particularly limited, and may be appropriately determined depending on battery design. In the case of using copper foil as the negative electrode current collector 62, the thickness thereof is not particularly limited, and is, for example, 5 µm or more and 35 µm or less, desirably 7 µm or more and 20 µm or less.

The negative electrode active material layer 64 includes a negative electrode active material. Examples of the negative electrode active material include carbon materials such as graphite, hard carbon, and soft carbon. Graphite may be natural graphite or artificial graphite, and may be amorphous carbon-coated graphite in which graphite is coated with an amorphous carbon material.

An average particle size (median particle size: D50) of the negative electrode active material is not particularly limited, and is, for example, 0.1 µm or more and 50 µm or less, desirably 1 µm or more and 25 µm or less, and more desirably 5 µm or more and 20 µm or less. It should be noted that the average particle size (D50) of the negative electrode active material can be obtained by, for example, a laser diffraction and scattering method.

The negative electrode active material layer 64 can include components other than the active material, such as a binder or a thickener. Examples of the binder include styrenebutadiene rubber (SBR) and polyvinylidene fluoride (PVDF). Examples of the thickener include carboxymethyl cellulose (CMC).

A content of the negative electrode active material in the negative electrode active material layer 64 is desirably 90 mass% or more, and more desirably 95 mass% or more and 99 mass% or less. A content of the binder in the negative electrode active material layer 64 is desirably 0.1 mass% or more and 8 mass% or less, and more desirably 0.5 mass% or more and 3 mass% or less. A content of the thickener in the negative electrode active material layer 64 is desirably 0.3 mass% or more and 3 mass% or less, and more desirably 0.5 mass% or more and 2 mass% or less.

A thickness of the negative electrode active material layer 64 is not particularly limited, and is, for example, 10 µm or more and 300 µm or less, desirably 20 µm or more and 200 µm or less.

Examples of the separators 70 include a porous sheet (film) of a resin such as polyethylene (PE), polypropylene (PP), polyester, cellulose, and polyamide. The porous sheet may have a single-layer structure or a laminated structure of two or more layers (e.g., three-layer structure in which PP layers are stacked on both surfaces of a PE layer). A heat-resistance layer (HRL) may be provided on a surface of each of the separators 70.

A nonaqueous electrolyte 80 typically includes a nonaqueous solvent and a supporting electrolyte (electrolyte salt). As the nonaqueous solvent, various organic solvents such as carbonates, ethers, esters, nitriles, sulfones, and lactones for use in an electrolyte of a typical lithium ion secondary battery can be used without any particular limitation. Specific examples of such a nonaqueous solvent include ethylene carbonate (EC), propylene carbonate (PC), diethyl carbonate (DEC), dimethyl carbonate (DMC), ethyl methyl carbonate (EMC), monofluoroethylene carbonate (MFEC), difluoroethylene carbonate (DFEC), monofluoromethyl difluoromethyl carbonate (F-DMC), trifluorodimethyl carbonate (TFDMC), methyl acetate, and methyl propionate. Such nonaqueous solvents may be used alone or two or more of them may be used in combination.

Desired examples of the supporting electrolyte include lithium salts (desirably LiPF₆) such as LiPF₆, LiBF₄, and lithium bis(fluorosulfonyl)imide (LiFSI). A concentration of the supporting electrolyte is desirably 0.7 mol/L or more and 1.3 mol/L or less.

The nonaqueous electrolyte 80 may include components not described above, for example, various additives exemplified by: film forming agents such as vinylene carbonate (VC) and an oxalato complex; gas generating agents such as biphenyl (BP) and cyclohexylbenzene (CHB); and a thickener, to the extent that the effects of the present disclosure are not significantly impaired.

The thus-configured lithium ion secondary battery 100 has high gas generation suppressing performance during storage. The lithium ion secondary battery 100 can have both a high volume energy density and high gas generation suppressing performance during storage. The lithium ion secondary battery 100 also has high cycle characteristics (especially resistance to capacity degradation in repetitive charging and discharging). The lithium ion secondary battery 100 is applicable to various applications. Specific examples of application of the lithium ion secondary battery 100 include: portable power supplies for personal computers, portable electronic devices, portable terminals, and other devices; vehicle driving power supplies for vehicles such as electric vehicles (BEVs), hybrid electric vehicles (HEVs), and plug-in hybrid electric vehicles (PHEVs); and storage batteries for small power storage devices, and among these devices, vehicle driving power supplies are especially desirable. The lithium ion secondary battery 100 can be used in a battery module in which a plurality of batteries are typically connected in series and/or in parallel.

The foregoing description is directed to the square lithium ion secondary battery 100 including the flat wound electrode body 20 as an example. Alternatively, the nonaqueous electrolyte secondary battery disclosed here can also be configured as a lithium ion secondary battery including a stacked-type electrode body (i.e., electrode body in which a plurality of positive electrodes and a plurality of negative electrodes are alternately stacked). The stacked-type electrode body may include a plurality of separators each interposed between one positive electrode and one negative electrode or may include one separator in such a manner that positive electrodes and negative electrodes are alternately stacked with one separator being repeatedly folded.

The nonaqueous electrolyte secondary battery disclosed here may be configured as a coin type lithium ion secondary battery, a button type lithium ion secondary battery, a cylindrical lithium ion secondary battery, or a laminated case type lithium ion secondary battery. The nonaqueous electrolyte secondary battery disclosed here may be configured as a nonaqueous electrolyte secondary battery other than a lithium ion secondary battery, by a known method.

On the other hand, the positive electrode according to the embodiment described above can be used for constituting an all-solid-state secondary battery (especially all-solid-state lithium ion secondary battery) according to a known method by using a solid electrolyte instead of the nonaqueous electrolyte 80.

Examples of the present disclosure will now be described, but it is not intended to limit the present disclosure to these examples.

### <Example 1>

As first lithium composite oxide particles, LiNi_{0.6}Co_{0.2}Mn_{0.2}O₂ in the form of single particles having a 50%-particle size (D50) of 4.0 µm and a BET specific surface area of 0.65m²/g was prepared. As second lithium composite oxide particles, LiNi_{0.55}Co_{0.20}Mn_{0.25}O₂ in the form of secondary particles having a 50%-particle size (D50) of 16.5 µm, a particle size distribution width of 0.62, and a BET specific surface area of 0.20 m²/g was prepared. The 50%-particle size (D50), the particle size distribution width, and the BET specific surface area were determined in the manners described later.

The first lithium composite oxide particles and the second lithium composite oxide particles were mixed at a mass ratio of 50 : 50, thereby preparing a positive electrode active material. This positive electrode active material, carbon black as a conductive material, and polyvinylidene fluoride (PVDF) as a binder were mixed at a mass ratio of positive electrode active material : AB : PVDF = 97.5 : 1.5 : 1.0. To the resulting mixture, an appropriate amount of N-methyl-2-pyrrolidone (NMP) was added, thereby preparing positive electrode active material layer slurry.

The positive electrode active material layer slurry was applied to both surfaces of a positive electrode current collector of aluminum foil, and dried, thereby forming a positive electrode active material layer. The positive electrode active material layer was roll-pressed under a pressure of 150 kPa with rolling rollers. The resultant was cut into a predetermined size, and an aluminum tab was attached thereto, thereby preparing a positive electrode sheet. The positive electrode active material layer of the positive electrode sheet of Example 1 had a density of 3.50 g/cm³. A BET specific surface area of the positive electrode active material layer measured by the method described later was 0.49 m²/g.

Graphite (C) as a negative electrode active material, styrene butadiene rubber (SBR) as a binder, and carboxymethyl cellulose (CMC) as a thickener were mixed in ion-exchanged water at a mass ratio of C : SBR : CMC = 98 : 1 : 1, thereby preparing negative electrode active material layer slurry. This negative electrode active material layer slurry was applied onto copper foil and then dried, thereby forming a negative electrode active material layer. The negative electrode active material layer was roll-pressed to have a predetermined density with rolling rollers. The resultant was cut into a predetermined size, and a nickel tab was attached thereto, thereby preparing a negative electrode sheet.

As a separator, a porous polyolefin sheet was prepared. The positive electrode sheets and the negative electrode sheets were alternately stacked with separators interposed therebetween, thereby obtaining a stacked-type electrode body.

The stacked-type electrode body was inserted into a battery case constituted by an aluminum laminated sheet, and a nonaqueous electrolyte was injected to the battery case. The nonaqueous electrolyte used was one obtained by dissolving LiPF₆ as a supporting electrolyte at a concentration of 1 mol/L in a mixed solvent including ethylene carbonate (EC) and ethyl methyl carbonate (EMC) at a volume ratio of EC : EMC = 30 : 70 and adding 0.3 mass% of vinylene carbonate to the resulting solution. Thereafter, the battery case was sealed, thereby obtaining an evaluation lithium ion secondary battery of Example 1.

### <Examples 2 to 8 and Comparative Examples 1 to 4>

An evaluation lithium ion secondary battery was produced by the same method as Example 1 except for preparing a positive electrode active material by using second lithium composite oxide particles having a 50%-particle size (D50) and a particle size distribution width shown in Table 1 and mixing first lithium composite oxide particles and the second lithium composite oxide particles at a mass ratio shown in Table 1. It should be noted that the particle size distribution width of the second lithium composite oxide particles was changed by varying conditions of crushing and classification of the second lithium composite oxide particles in fabrication. Table 1 shows a density and a BET specific surface area of the obtained positive electrode sheet.

### <Particle Size Distribution Measurement of First and Second Lithium Composite Oxide Particles>

Volume-based particle size distributions of the first and second lithium composite oxide particles were measured by using a commercially available laser diffraction scattering type particle size distribution analyzer ("Mastersizer-3000" manufactured by Malvern Panalytical). Particle sizes corresponding to cumulative frequencies 10 vol%, 50 vol%, and 90 vol% from a small fine particle side were determined as a 10%-particle size (D10), a 50%-particle size (D50), and a 90%-particle size (D90). A particle size distribution width of the second lithium composite oxide particles was determined by calculating (D90-D10)/D50.

### <BET Specific Surface Area Measurement>

BET specific surface areas of first and second lithium composite oxide particles and a positive electrode active material layer were measured by a nitrogen adsorption method with a commercially available specific surface area analyzer ("Macsorb HM Model-1208" manufactured by Mountech Co., Ltd.).

### <Evaluation of Gas Generation Amount during Storage>

Each evaluation lithium ion secondary battery was charged to 4.25 V with a constant current at a current density of 0.2 mA/cm² under a temperature environment of 25°C, and then charged with a constant voltage of 4.25 V until the current density reaches 0.04 mA/cm². Each evaluation lithium ion secondary battery was rested for 10 minutes, and then discharged with a constant current to 3.0 V at a current density of 0.2 mA/cm². A gas amount at this time was determined, and used as a gas amount before storage.

Next, each evaluation lithium ion secondary battery was charged to 4.25 V with a constant current at a current density of 0.2 mA/cm² under a temperature environment of 25°C, and then charged with a constant voltage of 4.25 V until the current density reaches 0.04 mA/cm². Each evaluation lithium ion secondary battery was stored for 60 days in a thermostat at 60°C. Each evaluation lithium ion secondary battery was discharged with a constant current to 3.0 V at a current density of 0.2 mA/cm², and then a gas amount was determined and used as a gas amount after storage.

From a difference between the gas amount after storage and the gas amount before storage, a gas generation amount was determined. Then, supposing the gas generation amount of Example 2 is 100, gas generation amount ratios of other examples and comparative examples were determined. Table 1 shows the results.

### <Measurement of Volumetric Charging-Capacity Density>

As initial charging, each evaluation lithium ion secondary battery was charged to 4.25 V with a constant current at a current density of 0.2 mA/cm² under a temperature environment of 25°C, and then charged with a constant voltage of 4.25 V until the current density reaches 0.04 mA/cm². A charge capacity at this time was determined.

A sample obtained by mixing first lithium composite oxide particles and second lithium composite oxide particles at a mass ratio shown in Table 1 and molding the resulting mixture into a cylinder shape of Φ19 mm was pressed under a load of 70 kN for 30 seconds. A density of the pressed mixture was measured. The obtained density was multiplied by the charge capacity described above, thereby calculating a volumetric charging-capacity density (mAh/cm³). Table 1 shows the results.

### <Cycle Characteristic Evaluation>

As initial charging, each evaluation lithium ion secondary battery was charged to 4.25 V with a constant current at a current density of 0.2 mA/cm² under a temperature environment of 25°C, and then charged with a constant voltage of 4.25 V until the current density reaches 0.04 mA/cm². Each evaluation lithium ion secondary battery was rested for 10 minutes, and then discharged with a constant current to 3.0 V at a current density of 0.2 mA/cm².

Each evaluation lithium ion secondary battery was placed under a temperature environment of 25°C, charged with a constant current to 4.18 V at a current density of 0.2 mA/cm², and then charged with a constant voltage until the current density reaches 0.04 mA/cm². Thereafter, each evaluation lithium ion secondary battery was discharged with a constant current to 3.48 V at a current density of 0.2 mA/cm². A discharge capacity at this time was obtained. This charging and discharging process was defined as one cycle, and 400 cycles of the charging and discharging process were repeatedly performed on each evaluation lithium ion secondary battery. A discharge capacity at the 400th cycle was obtained. From (discharge capacity at 400th cycle of charging and discharging process/discharge capacity at first cycle of charging and discharging process) × 100, a capacity retention rate (%) was obtained as an index of cycle characteristics. Table 1 shows the results.

[Table 1]

**Table 1**

| | Second lithium composite oxide particles | | Mass ratio | Positive electrode active material layer | | Gas generation amount rate after storage | Volumetric charging-capacity density (mAh/cm³) | Capacity retention rate (%) |
|---|---|---|---|---|---|---|---|---|
| | D50 (*µ*m) | (D90-D10)/D50 | (First:Second) | Density (g/cm³) | BET specific surface area (m²/g) | | | |
| Comparative Example 1 | 16.2 | 0.74 | 50:50 | 3.5 | 0.58 | 120 | 703 | 93 |
| Comparative Example 2 | 16.3 | 0.68 | 50:50 | 3.5 | 0.53 | 112 | 704 | 94 |
| Example 1 | 16.5 | 0.65 | 50:50 | 3.5 | 0.49 | 107 | 704 | 93 |
| Example 2 | 16.6 | 0.60 | 50:50 | 3.5 | 0.44 | 100 | 705 | 93 |
| Example 3 | 16.3 | 0.54 | 50:50 | 3.5 | 0.46 | 102 | 703 | 93 |
| Example 4 | 16.4 | 0.50 | 50:50 | 3.5 | 0.50 | 108 | 703 | 92 |
| Comparative Example 3 | 16.2 | 0.46 | 50:50 | 3.5 | 0.55 | 115 | 705 | 93 |
| Comparative Example 4 | 16.4 | 0.40 | 50:50 | 3.5 | 0.64 | 128 | 704 | 92 |
| Example 5 | 16.6 | 0.60 | 20:80 | 3.5 | 0.43 | 100 | 696 | 86 |
| Example 6 | 16.6 | 0.60 | 30:70 | 3.5 | 0.42 | 96 | 700 | 89 |
| Example 7 | 16.6 | 0.60 | 80:20 | 3.0 | 0.48 | 105 | 609 | 94 |
| Example 8 | 16.6 | 0.60 | 70:30 | 3.1 | 0.46 | 102 | 626 | 94 |

It can be understood from the result of Table 1 that in the case of using both single particles with small particle sizes (i.e., first lithium composite oxide) and secondary particles with large particle-sizes (i.e., second lithium composite oxide), high gas generation suppressing performance during storage of a lithium ion secondary battery can be obtained when a particle size distribution width of the second lithium composite oxide is 0.50 to 0.65. It can be understood from the result of Table 1 that the positive electrode active material layers of Examples have BET specific surface areas smaller than those of Comparative Examples. When secondary particles are cracked in pressing of the positive electrode active material layer, the BET specific surface area of the positive electrode active material layer increases. Thus, it can be concluded that in Examples, cracking of secondary particles is suppressed in pressing of the positive electrode active material layer.

Thus, it can be understood that the positive electrode active material disclosed here can impart high gas generation suppressing performance during storage to the nonaqueous electrolyte secondary battery even in the case of increasing the density of the positive electrode active material layer.

Specific examples of the present disclosure have been described in detail hereinbefore, but are merely illustrative examples, and are not intended to limit the scope of claims. The techniques described in claims include various modifications and changes of the above exemplified specific examples.

That is, the positive electrode active material, the positive electrode, and the secondary battery disclosed here are the following items [1] to [9].
[1] A positive electrode active material including:
   first lithium composite oxide particles in the form of single particles; and
   second lithium composite oxide particles in the form of secondary particles, wherein
   when in a volume-based particle size distribution obtained by a laser diffraction scattering method, a 10%-particle size D10 is a particle size with a cumulative frequency of 10%, a 50%-particle size D50 is a particle size with a cumulative frequency of 50%, and a 90%-particle size D90 is a particle size with a cumulative frequency of 90%, a 50%-particle size of the second lithium composite oxide particles is larger than a 50%-particle size of the first lithium composite oxide particles, and a particle size distribution width of the second lithium composite oxide particles expressed by (D90-D10)/D50 is 0.50 to 0.65.
[2] The positive electrode active material of item [1], wherein the particle size distribution width is 0.52 to 0.62.
[3] The positive electrode active material of item [1] or [2], wherein the 50%-particle size of the first lithium composite oxide particles is 2 µm to 6 µm, and the 50%-particle size of the second lithium composite oxide particles is 12 µm to 20 µm.
[4] The positive electrode active material of any one of items [1] to [3], wherein a mass ratio of the first lithium composite oxide particles to the second lithium composite oxide particles is 40/60 to 60/40.
[5] The positive electrode active material of any one of items [1] to [4], wherein each of the first lithium composite oxide particles and the second lithium composite oxide particles is particles of a lithium nickel cobalt manganese composite oxide.
[6] The positive electrode active material of item [5], wherein a content of nickel with respect to all metal elements except for lithium in the lithium nickel cobalt manganese composite oxide is 50 mol% or more.
[7] A positive electrode including:
   a positive electrode current collector; and
   a positive electrode active material layer supported by the positive electrode current collector, wherein
   the positive electrode active material layer includes the positive electrode active material of any one of items [1] to [6].
[8] The positive electrode of item [7], wherein the positive electrode active material layer has a density of 3.50 g/cm³ to 4.00 g/cm³.
[9] A nonaqueous electrolyte secondary battery includes:
   a positive electrode;
   a negative electrode; and
   a nonaqueous electrolyte, wherein
   the positive electrode is the positive electrode of item [7] or [8].

## Claims

1. A positive electrode active material comprising:
first lithium composite oxide particles in the form of single particles; and
second lithium composite oxide particles in the form of secondary particles, wherein
when in a volume-based particle size distribution obtained by a laser diffraction scattering method, a 10%-particle size (D10) is a particle size with a cumulative frequency of 10%, a 50%-particle size (D50) is a particle size with a cumulative frequency of 50%, and a 90%-particle size (D90) is a particle size with a cumulative frequency of 90%, a 50%-particle size of the second lithium composite oxide particles is larger than a 50%-particle size (D50) of the first lithium composite oxide particles, and a particle size distribution width of the second lithium composite oxide particles expressed by (D90-D10)/D50 is 0.50 to 0.65.

2. The positive electrode active material according to claim 1, wherein the particle size distribution width is 0.52 to 0.62.

3. The positive electrode active material according to claim 1, wherein the 50%-particle size (D50) of the first lithium composite oxide particles is 2 µm to 6 µm, and the 50%-particle size (D50) of the second lithium composite oxide particles is 12 µm to 20 µm.

4. The positive electrode active material according to claim 1, wherein a mass ratio of the first lithium composite oxide particles to the second lithium composite oxide particles is 40/60 to 60/40.

5. The positive electrode active material according to claim 1, wherein each of the first lithium composite oxide particles and the second lithium composite oxide particles is particles of a lithium nickel cobalt manganese composite oxide.

6. The positive electrode active material according to claim 5, wherein a content of nickel with respect to all metal elements except for lithium in the lithium nickel cobalt manganese composite oxide is 50 mol% or more.

7. A positive electrode (50) comprising:
a positive electrode current collector (52); and
a positive electrode active material layer (54) supported by the positive electrode current collector (52), wherein
the positive electrode active material layer (54) includes the positive electrode active material according to claim 1.

8. The positive electrode (50) according to claim 7, wherein the positive electrode active material layer (54) has a density of 3.50 g/cm³ to 4.00 g/cm³.

9. A nonaqueous electrolyte secondary battery (100) comprising:
a positive electrode (50);
a negative electrode (60); and
a nonaqueous electrolyte (80), wherein
the positive electrode (50) is the positive electrode (50) according to claim 7.
